# FASCICULE DE BREVET EUROPEEN

(11) **EP 1 060 868 B1**
(45) Date de publication et mention de la délivrance du brevet: **04.06.2003**
(21) Numéro de dépôt: 00420127.3
(22) Date de dépôt: 14.06.2000
(51) Int. Cl.: B29C 69/00

(54) **Moule d'injection avec assemblage intégré**
Spritzgiessform mit integriertem Zusammenbau
Injection mould with integrated assembly

(30) Priorité: 14.06.1999 FR 9907688
(43) Date de publication de la demande: 20.12.2000
(73) Titulaire: Societe Jean-Pierre Grosfilley, 01100 Martignat (FR)
(72) Inventeur: Grosfilley, Jean-Pierre, 01100 Oyonnax (FR)
(74) Mandataire: Bratel, Gérard

(56) Documents cités:
- DE-A- 2 815 802
- DE-A- 4 126 041
- PATENT ABSTRACTS OF JAPAN vol. 1998, no. 11, 30 septembre 1998 (1998-09-30) -& JP 10 175230 A (NISSEI PLASTICS IND CO), 30 juin 1998 (1998-06-30)
- PATENT ABSTRACTS OF JAPAN vol. 1995, no. 4, 31 mai 1995 (1995-05-31) -& JP 07 009475 A (JAPAN STEEL WORKS LTD:THE), 13 janvier 1995 (1995-01-13)
- PATENT ABSTRACTS OF JAPAN vol. 1996, no. 6, 28 juin 1996 (1996-06-28) -& JP 08 034032 A (INOAC CORP), 6 février 1996 (1996-02-06)

## Description

La présente invention concerne un moule conçu entre autres pour l'injection de corps entièrement ou partiellement creux, notamment des corps creux réalisés en deux parties accolées souvent désignés comme "demi-coquilles", ce moule convenant aussi à l'injection d'autres pièces nécessitant un assemblage de parties moulées séparément.

Certains corps creux, tels que les collecteurs d'admission pour automobiles, sont réalisés en deux parties moulées séparément par injection, puis assemblées entre elles par un procédé de soudure par vibrations, ou bien par mise en place d'un joint encliqueté réunissant ces deux parties. Ce mode de fabrication traditionnel nécessite des machines distinctes pour le moulage d'une part, et pour l'assemblage d'autre part, avec nécessité de transfert des pièces moulées de la machine de moulage vers la machine d'assemblage. Ainsi, un investissement important en outillage est nécessaire, l'ensemble est encombrant et la productivité reste faible.

Il a déjà été proposé, par le brevet US N° 5221538, une machine de moulage par injection permettant de réaliser entièrement des corps creux, grâce à une combinaison de noyaux et d'empreintes de moulage portés par deux parties de moule montées tournantes l'une par rapport à l'autre, les noyaux et empreintes étant répartis autour de l'axe de rotation de la partie tournante du moule.

Dans le cas de cette technique connue, les pressions de fermeture et d'injection s'exercent de façon dissymétrique au cours du fonctionnement du moule, et il en résulte notamment un mauvais verrouillage du moule. De plus, la pièce à mouler restant dans son logement à l'intérieur du moule, le joint réunissant les deux demi-coquilles ne peut être formé extérieurement et doit être réalisé intérieurement, avec le risque que la matière injectée à cet effet ne vienne, de façon non souhaitée, à l'intérieur du corps creux à réaliser. Enfin, il n'est pas garanti que le joint soit moulé sur des surfaces propres et sèches.

On connaît aussi, par le document JP 10 175230 A qui sert de base au préambule de la revendication 1, un moule pour la réalisation de corps creux, formés de deux parties ou demi-coquilles, qui comprend : un corps de moule fixe avec un noyau de moulage excentré, un corps de moule mobile avec un autre noyau de moulage excentré situé à l'opposé du précédent, une première partie tournante avec deux empreintes de moulage, une deuxième partie tournante avec deux empreintes de moulage, des moyens d'entraînement en rotation des deux parties tournantes, et des moyens d'amenée de matière à injecter. Les axes de rotation des deux parties tournantes étant disposés symétriquement par rapport à l'axe central du moule, les deux parties ou demi-coquilles sont injectées respectivement dans des cavités de moulage situées au niveau des deux noyaux de moules opposés, puis sont transférées dans la zone centrale du moule, formant une troisième cavité, où est injecté un joint réunissant ces deux parties ou demi-coquilles.

Dans cette réalisation connue, chaque partie tournante est accolée au corps de moule fixe ou mobile correspondant, et les moyens d'entraînement en rotation de chaque partie tournante sont situés du côté du corps de moule correspondant. Il en résulte en particulier, une impossibilité d'entraîner en rotation les deux parties tournantes à partir d'un seul et même côté du moule, notamment à partir d'une base tournante unique placée sur un côté du moule.

La présente invention vise à éviter tous les inconvénients précités, en fournissant un moule pour l'injection de corps creux et d'autres pièces, réalisant toutes les opérations requises sans nécessité de reprise des pièces, de manière à obtenir un gain en investissement d'outillage, en encombrement et en productivité, tout en assurant l'équilibrage des pressions de verrouillage et en permettant la réalisation d'un joint d'assemblage extérieur, avec entraînement en rotation des deux parties tournantes du moule par une base tournante unique.

A cet effet, l'invention a pour objet un moule pour l'injection de corps creux, ou d'autres pièces, composés de deux parties ou demi-coquilles réunies par un joint ou autre partie intermédiaire, le moule comprenant:
- un corps de moule fixe, comportant un noyau de moulage fixe excentré par rapport à l'axe central du moule, et des moyens d'amenée de matière à injecter,
- un corps de moule mobile, disposé en regard du corps de moule fixe et comportant un autre noyau de moulage excentré, situé, par rapport à l'axe central du moule, du côté opposé au noyau de moulage du corps de moule fixe,
- une première partie tournante située entre le corps de moule fixe et le corps de moule mobile, et possédant un axe de rotation et de translation parallèle à l'axe central du moule, la première partie tournante présentant deux empreintes de moulage diamétralement opposées, dont les fonds respectifs sont dirigés vers le corps de moule fixe, chaque empreinte pouvant venir en correspondance avec le noyau de moulage du corps de moule fixe ou avec l'axe central du moule,
- une deuxième partie tournante située entre le corps de moule fixe et la première partite tournante, et possédant un axe de rotation et de translation parallèle à l'axe central du moule, et disposé symétriquement à l'axe de rotation de la première partie tournante par rapport à l'axe central du moule, la deuxième partie tournante possédant deux empreintes de moulage diamétralement opposées dont les fonds respectifs sont dirigés vers le corps de moule mobile, chaque empreinte pouvant venir en correspondance avec le noyau de moulage du corps de moule mobile ou avec l'axe central du moule,
- des moyens d'entraînement en rotation des deux parties tournantes, selon un angle de 180°, pour l'échange des positions de leurs deux empreintes,
les moyens d'amenée de matière à injecter étant prévus pour alimenter une première cavité de moulage située au niveau du noyau de moulage fixe excentré, pour mouler une première partie ou demi-coquille du corps ou de la pièce à réaliser, une deuxième cavité de moulage située au niveau de l'autre noyau de moulage excentré, pour mouler une deuxième partie ou demi-coquille du corps ou de la pièce à réaliser, et une troisième cavité située dans la zone centrale du moule, pour la réalisation par injection du joint ou autre partie intermédiaire, réalisant l'assemblage des deux parties ou demi-coquilles moulées, ce moule étant caractérisé en ce que la première partie tournante du moule possède un arbre de support et d'entraînement traversant de façon coulissante et rotative le corps de moule mobile, et la deuxième partie tournante possède elle aussi un arbre de support et d'entraînement traversant de façon coulissante et rotative le corps de moule mobile, et prolongé, au-delà de cette deuxième partie tournante, par un arbre de maintien monté coulissant et rotatif dans le corps de moule fixe. Avantageusement, cet arbre de maintien est pourvu d'une tête terminale, formant une butée qui coopère, en position d'ouverture du moule, avec le corps de moule fixe.

Dans une forme de réalisation de l'invention, les deux arbres de et d'entraînement, associés respectivement aux deux parties tournantes, sont des arbres cannelés qui traversent respectivement deux pignons de transmissions cannelés intérieurement et montés tournants dans le corps du moule mobile, les deux pignons de transmission engrenant avec un même pignon central d'entraînement monté tournant dans le corps de moule mobile et lié en rotation avec un arbre cannelé central, ce dernier arbre étant prévu notamment pour être accouplé à la base tournante précédemment évoquée.

Le mouvement axial desdits arbres de support et d'entraînement, notamment cannelés, permet de "soulever" les parties moulées en premier lieu, et ensuite d'amener de la matière moulée additionnelle de part et d'autre de ces parties, lors de la deuxième opération de moulage.

Ainsi, le moule selon l'invention est conçu avec deux parties tournantes, possédant des axes de rotation et de translation respectifs placés de part et d'autre d'un axe central, par exemple horizontalement au-dessus et au-dessous de l'axe central horizontal du moule, les trois axes considérés étant ainsi situés dans un même plan vertical. Sur les deux parties tournantes sont aménagées les empreintes de moulage, dans lesquelles les parties (telles que demi-coquilles) moulées restent en place, pendant la rotation. Chaque rotation transfère les demi-coquilles moulées depuis les deux positions extrêmes de moulage vers la position centrale, où un assemblage des deux demi-coquilles est réalisé par l'injection d'un joint à la périphérie du corps creux à obtenir.

Les trois positions de moulage étant ainsi alignées, les pressions de verrouillage sont équilibrées. La puissance de la machine de moulage est ainsi optimisée, contrairement aux procédés connus où les pressions s'exercent de façon dissymétrique.

Dans le cas de la fabrication d'un corps creux, la réalisation du joint, qui réunit de façon étanche les deux demi-coquilles du corps creux, s'effectue dans la zone de l'axe central du moule, et peut s'effectuer aisément à la périphérie du corps creux à réaliser, du côté extérieur de ce corps, sans risque de pénétration de matière dans le volume intérieur de ce corps, et avec possibilité de réaliser par le joint moulé des accrochages mécaniques, ce qui fiabilise la liaison des deux demi-coquilles.

On notera aussi que le moule, objet de l'invention, est utilisable sur une machine à injecter classique, avantageusement équipée d'une base mécanique tournante (selon brevet français N° 94.11922/2.725.152 au nom du Demandeur) pour l'entraînement en rotation des deux parties tournantes du moule. Dans une forme de réalisation de l'invention, les moyens d'amenée de matière à injecter comprennent, du côté du corps de moule fixe, une arrivée de matière unique, alimentant simultanément une première buse d'injection associée au noyau de moulage fixe de ce corps de moule, une deuxième buse d'injection située en regard du noyau de moulage du corps de moule mobile, et une troisième buse d'injection prévue dans la zone centrale du moule, pour la réalisation du joint ou autre partie intermédiaire, qui est ainsi réalisé dans la même matière que les deux parties principales ou demi-coquilles du corps moulé, dont il assure la liaison. En variante, une arrivée de matière distincte peut être envisagée, pour réaliser ce joint dans une autre matière que celle constituant les deux parties principales ou demi-coquilles.

L'invention sera de toute façon mieux comprise à l'aide de la description qui suit, en référence au dessin schématique annexé représentant, à titre d'exemple, une forme d'exécution de ce moule d'injection avec assemblage intégré et illustrant des applications de ce moule :
Figure 1 est une vue en coupe longitudinale d'un moule conforme à la présente invention, dans une première étape d'un cycle de moulage ;
Figure 2 montre un détail A agrandi du corps creux en cours de moulage dans le moule de la figure 1 ;
Figure 3 est une vue en coupe longitudinale du moule, similaire à la figure 1 mais illustrant une deuxième étape du cycle de moulage ;
Figure 4 est une vue suivant la flèche F1 de figure 3
Figure 5 est une vue suivant la flèche F2 de figure 3
Figure 6 est une autre vue en coupe longitudinale du moule, similaire aux figures 1 et 3 mais illustrant une troisième étape du cycle de moulage ;
Figures 7 à 13 sont des vues en coupe de diverses pièces réalisables dans un moule selon la présente invention.

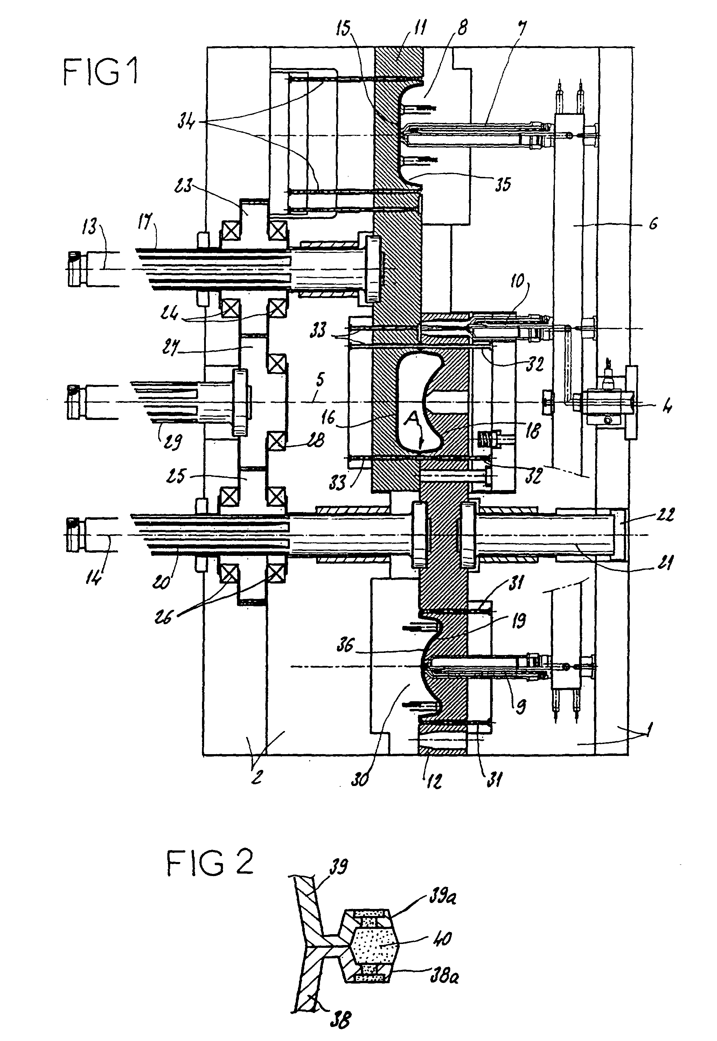

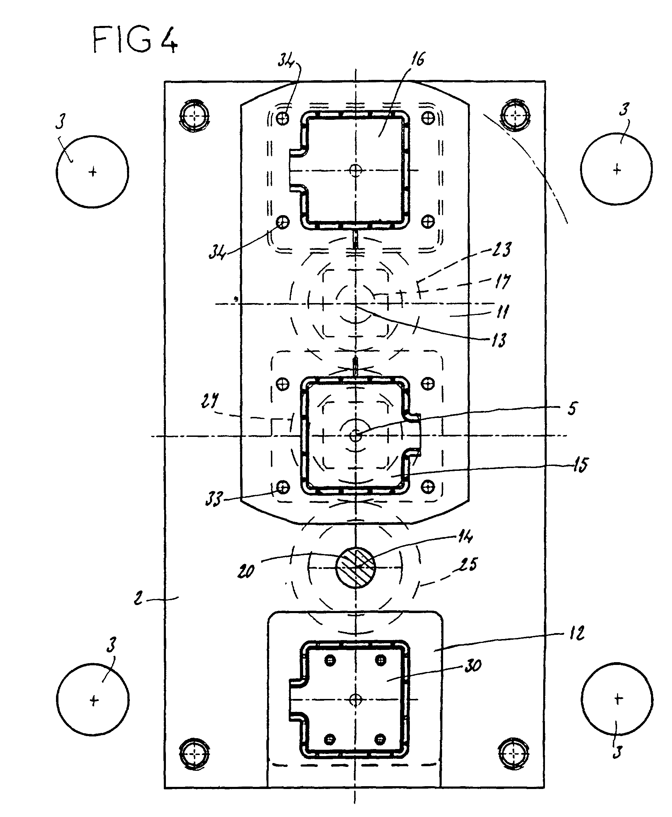

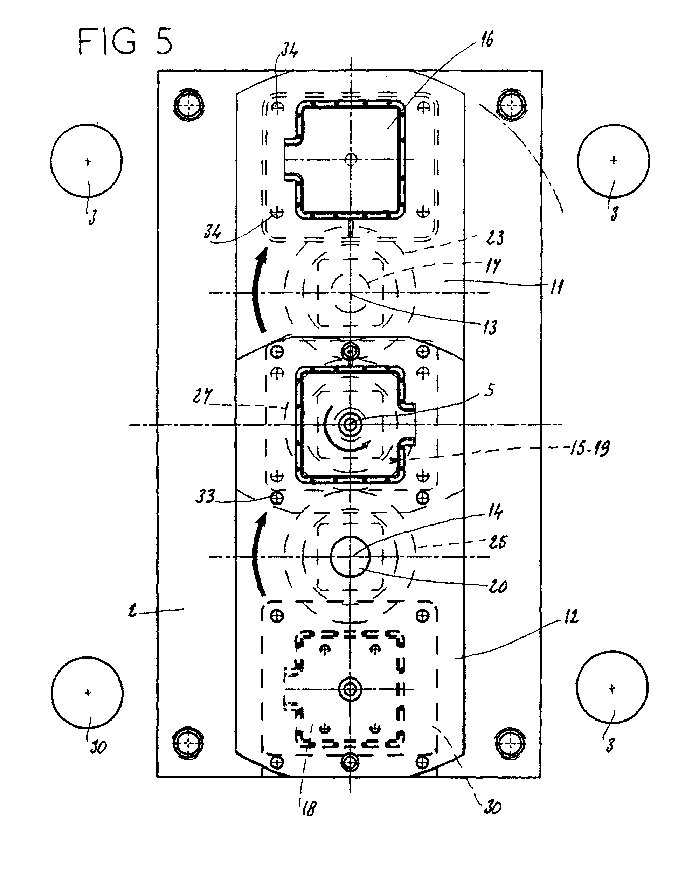

Le moule d'injection, représenté aux figures 1 à 6, comprend un corps de moule fixe 1, disposé verticalement, et un corps de moule mobile 2, disposé verticalement en regard du corps de moule fixe 1, et déplaçable horizontalement sur des colonnes de guidage 3 (voir figures 4 et 5) de manière à pouvoir être rapproché ou éloigné du corps de moule fixe 1.

Le corps de moule fixe 1 comporte une arrivée centrale 4 de matière à injecter, disposée suivant l'axe général horizontal 5 du moule. L'arrivée de matière 4 communique, par l'intermédiaire, d'un bloc chaud d'injection 6 incorporé au corps de moule fixe 1, avec une première buse chaude d'injection 7 située au-dessus de l'axe 5, au centre d'un noyau de moulage fixe 8 situé au sommet du corps de moule fixe 1. L'arrivée de matière 4 communique aussi, par l'intermédiaire du bloc chaud d'injection 6, avec une deuxième buse chaude d'injection 9, située au-dessous de l'axe 5, symétriquement par rapport à la première buse chaude d'injection 7. Enfin, l'arrivée de matière 4 communique, toujours par l'intermédiaire du bloc chaud d'injection 6, avec une troisième buse chaude d'injection 10, située à faible distance au-dessus de l'axe 5.

Le corps de moule mobile 2 porte lui-même deux parties tournantes 11 et 12, dont les axes de rotation respectifs sont indiqués en 13 et 14, et qui se situent entre ledit corps de moule mobile 2 et le corps de moule fixe 1.

La première partie tournante 11 possède un axe de rotation 13 horizontal, situé au-dessus de l'axe général 5 du moule. Cette première partie tournante 11, de forme générale rectangulaire (voir figure 5) et s'étendant dans un plan vertical, présente deux empreintes de moulage 15 et 16, diamétralement opposées par rapport à l'axe 13, dont les fonds respectifs sont dirigés vers le corps du moule fixe 1. La première partie tournante 11 est portée par un arbre cannelé horizontal 17 de support et d'entraînement, traversant de façon coulissante et rotative le corps de moule mobile 2.

La deuxième partie tournante 12 possède un axe de rotation 14 horizontal, situé au-dessous de l'axe général 5 du moule, symétriquement à l'axe de rotation 13 de la première partie tournante 11. Cette deuxième partie tournante 12, aussi de forme générale rectangulaire (voir figure 4) et s'étendant dans un plan vertical, présente deux empreintes de moulage 18 et 19 diamétralement opposées par rapport à l'axe 14, dont les fonds respectifs sont dirigés vers le corps de moule mobile 2. La deuxième partie tournante 12 est portée par un arbre cannelé horizontal 20 de support et d'entraînement, traversant de façon coulissante et rotative le corps de moule mobile 2. L'arbre cannelé 20 est prolongé, au-delà de la deuxième partie tournante 12, par un arbre de maintien 21, monté tournant et coulissant dans le corps de moule fixe 1, et pourvu d'une tête terminale 22.

L'arbre cannelé 17 de support et d'entraînement de la première partie tournante 11 traverse axialement un pignon de transmission 23, cannelé intérieurement, qui est lui-même monté tournant à l'intérieur du corps de moule mobile 2 par l'intermédiaire de roulements 24. De manière symétrique, l'arbre cannelé 20 de support et d'entraînement de la deuxième partie tournante 12 traverse axialement un autre pignon de transmission 25, cannelé intérieurement, qui est lui-même monté tournant à l'intérieur du corps de moule mobile 2 par l'intermédiaire de roulements 26. Les deux pignons de transmission 23 et 25 engrènent avec un même pignon central d'entraînement 27, monté tournant suivant l'axe 5 à l'intérieur du corps de moule mobile 2, par l'intermédiaire d'un roulement 28. Le pignon central 27 est lié en rotation avec un arbre cannelé central 29, disposé suivant l'axe 5 et accouplé à une base mécanique tournante d'entraînement non représentée (réalisable conformément au brevet français N° 94.11922/2.725.152 au nom du Demandeur).

Le corps de moule mobile 2 porte encore un noyau de moulage 30, fixe par rapport à ce corps 2, situé dans la partie inférieure du corps de moule mobile 2 en regard de la deuxième partie tournante 12 et de la deuxième buse chaude d'injection 9.

En correspondance avec les positions des différents noyaux et empreintes, le moule comprend des broches fixes et des éjecteurs, dont les fonctions sont bien connues en soi :
- Le corps de moule fixe 1 comporte ainsi des broches fixes 31 entourant la deuxième buse chaude d'injection 9, et des éjecteurs 32 situés dans la région de la troisième buse chaude d'injection 10, les broches 31 et éjecteurs 32 se situant en regard de la deuxième partite tournante 12.
- Le corps de moule mobile 2 comporte des broches fixes 33, au-dessous de l'axe de rotation 13 de la première partie tournante 11, et des éjecteurs 34, au-dessus de cet axe 13, les broches 33 et éjecteurs 34 se situant en regard de ladite première partie tournante 11.

Le moule d'injection, précédemment décrit, permet le moulage et l'assemblage de corps creux selon un cycle illustré par les figures 1, 3 et 6, et utilisant des rotations simultanées sur 180° des deux parties tournantes 11 et 12.

Dans une première étape d'un cycle de moulage et d'assemblage, comme le montre la figure 1, le moule est fermé c'est-à-dire que le corps de moule mobile 2 est rapproché du corps de moule fixe 1, les deux parties tournantes 11 et 12 étant elles-mêmes resserrées entre le corps de moule fixe 1 et le corps de moule mobile 2. Ainsi sont formées :
- une première cavité de moulage 35 résultant du rapprochement du noyau de moulage fixe 8 supérieur, et de l'une des empreintes de moulage 15 de la première partie tournante 11 ;
- une deuxième cavité de moulage 36, résultant du rapprochement du noyau de moulage 30 inférieur et de l'une des empreintes de moulage 19 de la deuxième partie tournante 12 ;
- une troisième cavité 37, centrée sur l'axe 5, résultant du rapprochement des deux autres empreintes de moulage 16 et 18, appartenant respectivement à la première partie tournante 11 et à la deuxième partie tournante 12.

Ces trois cavités 35, 36 et 37, alignées verticalement, sont alimentées simultanément en matière à injecter, par l'arrivée de matière centrale 4, le bloc chaud 6 et les trois buses chaudes 7, 9 et 10. Durant cette phase d'injection, sont formées simultanément :
- dans la cavité 35 supérieure, une première demi-coquille 38 constituant une moitié d'un corps creux à mouler,
- dans la cavité 36 inférieure, une deuxième demi-coquille 39 constituant l'autre moitié du corps creux à mouler, et
- à la périphérie de la cavité 37 centrale, un joint 40 réunissant deux demi-coquilles complémentaires réalisées au cours du cycle précédent.

Cette dernière opération est illustrée en détail sur la figure 2, qui montre à plus grande échelle la zone de jonction des rebords extérieurs respectifs 38a, 39a des deux demi-coquilles 38 et 39, la matière injectée pour former le joint étant indiquée en 40. Comme le montre cette figure, l'injection de la matière 40 assure un accrochage mécanique des bords 38a et 39a, donc une liaison fiable des deux demi-coquilles 38 et 39 par leur périphérie.

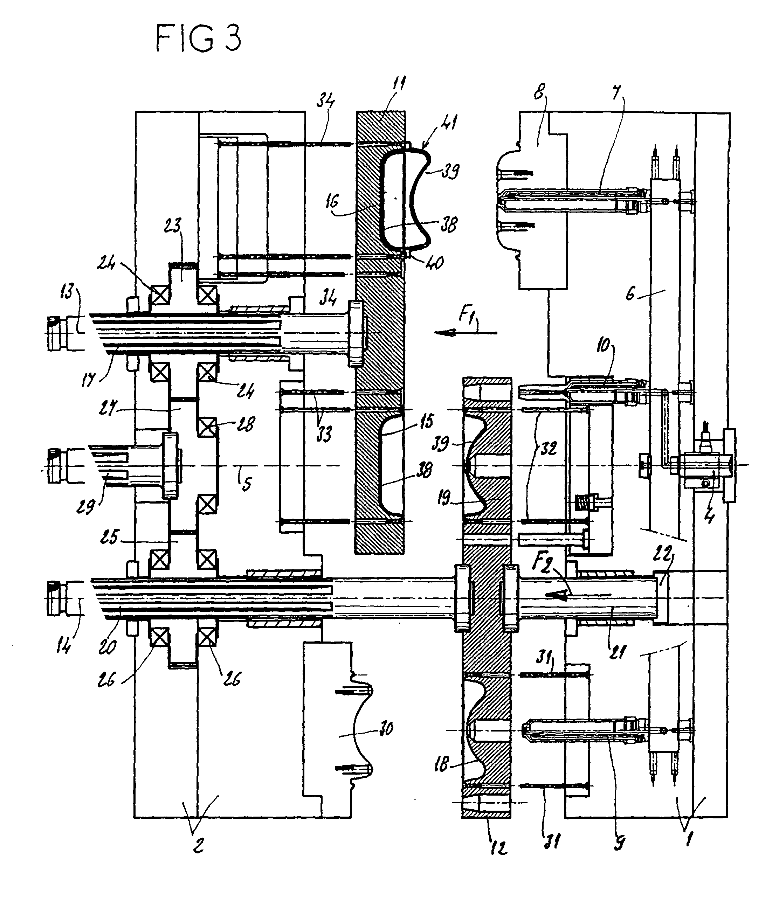

L'étape suivante, illustrée par la figure 3, consiste en l'ouverture du moule, le corps de moule mobile 2 s'écartant du corps de moule fixe 1, et les deux parties tournantes 11 et 12 s'écartant aussi l'une de l'autre, tout en s'éloignant des corps de moule fixe 1 et mobile 2 (jusqu'à la butée de la tête terminale 22 de l'arbre de maintien 21 de la deuxième partie tournante 12 contre le corps de moule fixe 1). Il est ensuite procédé à la rotation simultanée, sur 180°, des deux parties tournantes 11 et 12, en commandant la rotation de l'arbre central 29.

Au cours de cette double rotation, les deux demi-coquilles 38 et 39, précédemment formées dans les parties supérieure et inférieure du moule, et maintenues dans les empreintes correspondantes 15 et 19, sont transférées vers la région centrale du moule. Le corps creux 41, résultant de l'assemblage des deux demi-coquilles 38 et 39 formées au cours du cycle précédent, reste en place dans l'empreinte 16 de la première partie tournante 11, et se trouve ainsi transféré vers la partie haute du moule.

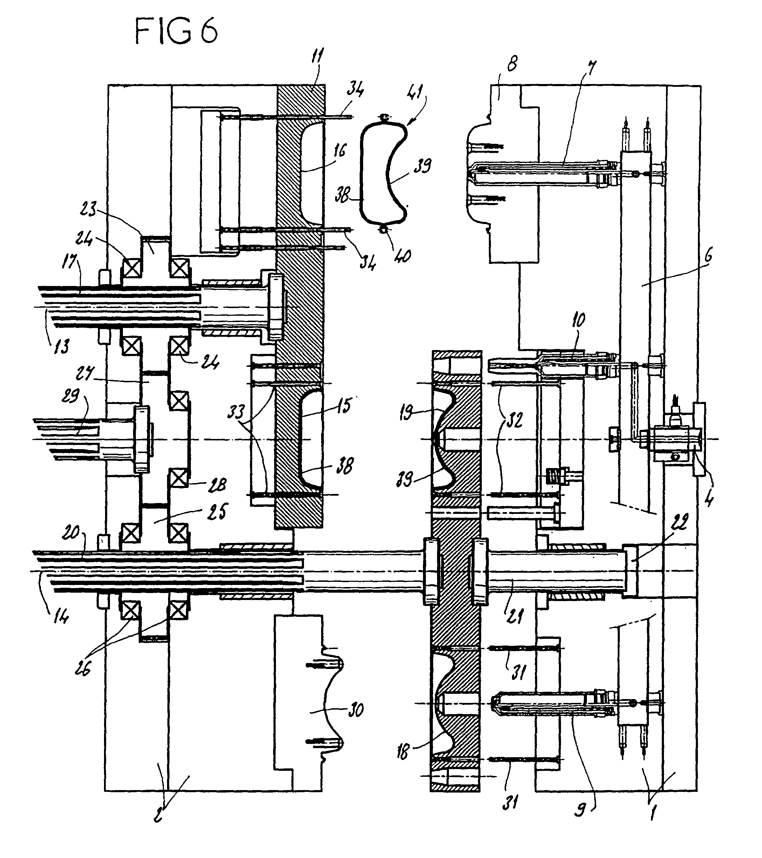

Dans l'étape suivante, illustrée par la figure 6, le moule reste ouvert mais la première partie tournante 11 est rapprochée du corps de moule mobile 2, de telle sorte que les éjecteurs 34 assurent l'éjection du corps creux 41 fini.

Le moule est ensuite refermé, ce qui assure notamment le rapprochement des deux demi-coquilles 38 et 39 précédemment formées, et ainsi le moule se retrouve dans la position initiale de la figure 1, prêt pour le début d'un nouveau cycle de moulage et d'assemblage identique à celui décrit précédemment.

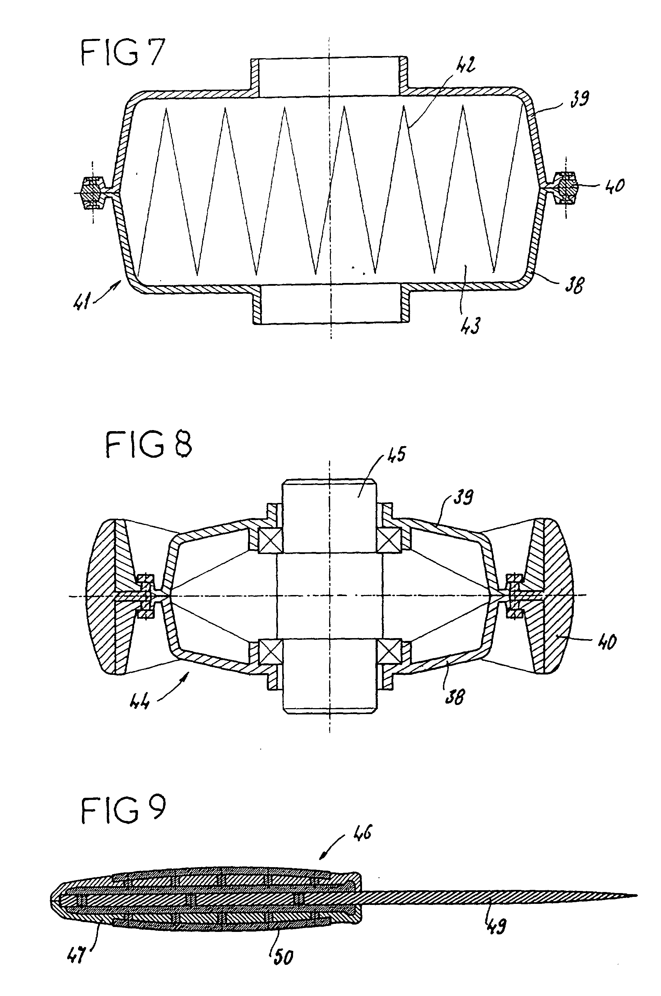

Les applications du moule d'injection avec assemblage intégré, tel que décrit précédemment, ne sont pas limitées à la fabrication de corps creux, tels que des réservoirs ou des collecteurs d'admission pour automobiles. Les figures 7 et suivantes illustrent des applications diverses de ce moule.

La figure 7 montre ainsi la possibilité de réaliser, avec un tel moule, un ensemble formé par un boîtier logeant un filtre. Le boîtier, assimilable à un corps creux 41, est obtenu par le moulage et l'assemblage de deux demi-coquilles 38 et 39, réunies par une matière de liaison injectée 40 formant un joint périphérique extérieur, comme décrit précédemment. Le filtre 42 est mis en place à la manière d'un insert, dans le volume intérieur 43 du corps creux 41, pendant le cycle de moulage, au moyen d'un robot. La pose de l'insert, dans un boîtier en cours de fabrication, est réalisable simultanément à l'évacuation du boîtier fini, précédemment réalisé (donc dans la position de la figure 6).

La figure 8 illustre l'application du moule selon l'invention à la réalisation d'un corps partiellement creux, en l'occurrence une roue 44 à jante creuse et à bandage. La jante est obtenue par le moulage de deux demi-coquilles 38 et 39, qui sont accolées avec mise en place d'un insert 45 formant l'axe de la roue, cet insert étant posé au moyen d'un robot. La matière de liaison injectée 40, assurant l'assemblage des deux demi-coquilles 38 et 39 à leur périphérie, forme ici le bandage de la roue 44, ainsi réalisé comme un surmoulage, entourant la jante.

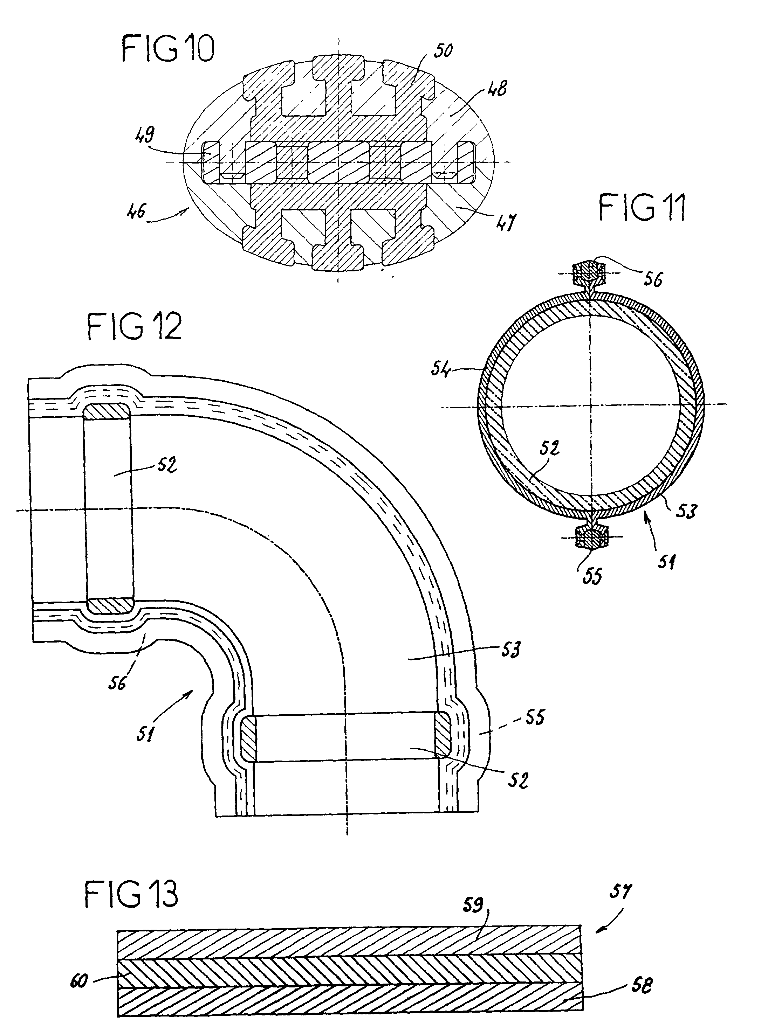

Les figures 9 et 10 illustrent l'application du moule objet de l'invention à l'obtention d'un corps plein, en l'occurrence le manche 46 d'un couteau, la figure 9 étant une vue en coupe longitudinale du couteau complet, et la figure 10 étant une vue en coupe transversale, à l'échelle agrandie, poussant au travers du manche 46. Ce dernier est formé de deux pièces moulées 47 à 48 opposées, accolées avec interposition d'un insert constitué par la lame métallique 49 du couteau. La matière de liaison injectée 50 réunit les deux pièces 47 et 48, en traversant des ouvertures de la lame 49. On obtient ainsi un couteau à manche 46 plein, compact, sans bavures de moulage. Bien entendu, la même technique est aussi applicable à la fabrication d'autres outils à manche et lame, tels que les tournevis.

Les figures 11 et 12 représentent, respectivement en coupe transversale et en coupe longitudinale, un raccord tubulaire 51 avec joints d'étanchéité annulaires 52, réalisé en moulant deux demi-coquilles 53 et 54, et en réunissant les deux demi-coquilles 53 et 54 par une matière de liaison injectée formant deux cordons 55 et 56 diamétralement opposés. Les joints 52 sont mis en place, ici encore, à la manière d'inserts. La même technique s'applique, bien entendu, non seulement à des raccords en coude, mais aussi à des raccords droits ou en "T", ces raccords pouvant comporter tous aménagements complémentaires, tels que des nervures extérieures, obtenus par moulage.

Enfin, la figure 13 illustre la possibilité de fabriquer, toujours au moyen du moule selon l'invention, un corps plein 57 se présentant comme une pièce pleine à trois couches superposées, soit deux plaques rigides 58 et 59 entre lesquelles est insérée une épaisseur de matière souple de liaison 60. Les deux plaques rigides 58 et 59 sont moulées séparément, puis réunies par injection de la matière souple de liaison 60. La représentation de la figure 13 reste évidemment schématique, les deux plaques rigides 58 et 59 pouvant posséder des particularités de forme non illustrées, selon la destination de l'ensemble concerné.

L'on ne s'éloignerait pas du cadre de l'invention en modifiant l'orientation des composants du moule, les empreintes de moulage n'étant pas obligatoirement superposées dans un même plan vertical, mais pouvant occuper aussi toute autre disposition alignée, par exemple horizontale, garantissant aussi l'équilibre des pressions de fermeture et d'injection.

Dans le même ordre d'idées, la conformation rectangulaire des deux parties tournantes 11 et 12 n'est pas une nécessité, et elle peut être remplacée par toute autre forme appropriée, dont les contours sont choisis de manière à ne pas heurter, en cours de rotation, les colonnes de guidage 3.

Alors que dans l'exemple illustré, une seule et même arrivée de matière 4 alimente les cavités de moulage 35, 36 des deux parties ou demi-coquilles 38, 39 et permet la réalisation du joint 40 ou autre partie intermédiaire réunissant ces deux demi-coquilles, il est aussi envisageable de réaliser ce joint ou autre partie intermédiaire dans une autre matière injectée, en utilisant une machine à injecter "bi-matière".

Enfin, un moule tel que précédemment décrit est utilisable pour la fabrication de nombreux corps, pièces, composants ou ensembles, que ceux-ci soient creux, partiellement creux ou au contraire pleins, le domaine d'application de l'invention étant particulièrement étendu et pouvant concerner toutes sortes d'industries.

## Revendications

1. Moule pour l'injection de corps creux, ou d'autres pièces, composés de deux parties ou demi-coquilles réunies par un joint ou autre partie intermédiaire, le moule comprenant :
- un corps de moule fixe (1), comportant un noyau de moulage fixe (8) excentré par rapport à l'axe central (5) du moule, et des moyens d'amenée (4, 6, 7, 9, 10) de matière à injecter,
- un corps de moule mobile (2), disposé en regard du corps de moule fixe (1) et comportant un autre noyau de moulage (30) excentré, situé, par rapport à l'axe central (5) du moule, du côté opposé au noyau de moulage (8) du corps de moule fixe (1),
- une première partie tournante (11) située entre le corps de moule fixe (1) et le corps de moule mobile (2), et possédant un axe de rotation et de translation (13) parallèle à l'axe central (5) du moule, la première partie tournante (11) présentant deux empreintes de moulage (15, 16) diamétralement opposées dont les fonds respectifs sont dirigés vers le corps de moule fixe (1), chaque empreinte (15, 16) pouvant venir en correspondance avec le noyau de moulage (8) du corps de moule fixe (1) ou avec l'axe central (5) du moule,
- une deuxième partie tournante (12) située entre le corps de moule fixe (1) et la première partie tournante (11), et possédant un axe de rotation et de translation (14) parallèle à l'axe central (5) du moule, et disposé symétriquement à l'axe de rotation (13) de la première partie tournante (12) par rapport à l'axe central (5) du moule, la deuxième partie tournante (12) possédant deux empreintes de moulage (18, 19) diamétralement opposées dans les fonds respectifs sont dirigés vers le corps de moule mobile (2), chaque empreinte (18, 19) pouvant venir en correspondance avec le noyau de moulage (30) du corps de moule mobile (2) ou avec l'axe central (5) du moule,
- des moyens d'entraînement en rotation (17, 20, 23 à 29) des deux parties tournantes (11, 12), selon un angle de 180°, pour l'échange des positions de leurs deux empreintes (15,16 ; 18,19),
les moyens d'amenée (4, 6, 7, 9, 10) de matière à injecter étant prévus pour alimenter une première cavité de moulage (35) située au niveau du noyau de moulage fixe excentré (8), pour mouler une première partie ou demi-coquille (38) du corps (41) ou de la pièce à réaliser, une deuxième cavité de moulage (36) située au niveau de l'autre noyau de moulage excentré (30), pour mouler une deuxième partie ou demi-coquille (39) du corps (41) ou de la pièce à réaliser, et une troisième cavité (37) située dans la zone centrale du moule, pour la réalisation par injection du joint (40) ou autre partie intermédiaire, réalisant l'assemblage des deux parties ou demi-coquilles (38, 39) moulées, **caractérisé en ce que** la première partie tournante (11) possède un arbre de support et d'entraînement (17) traversant de façon coulissante et rotative le corps de moule mobile (2), et **en ce que** la deuxième partie tournante (12) possède aussi un arbre de support et d'entraînement (20) traversant de façon coulissante et rotative le corps de moule mobile (2), et prolongé, au-delà de cette deuxième partie tournante (12), par un arbre de maintien (21) monté coulissant et rotatif dans le corps de moule fixe (1).

2. Moule selon la revendication1, dans lequel les axes de rotation et de translation respectifs (13, 14) des deux parties tournantes (11, 12) sont placés horizontalement au-dessus et au-dessous de l'axe central horizontal (5) du moule, les trois axes (5, 13, 14) étant situés ainsi dans un même plan vertical.

3. Moule selon la revendication 1 ou 2, dans lequel l'arbre de maintien (21) de la deuxième partie tournante (12) est pourvu d'une tête terminale (22), formant une butée qui coopère, en position d'ouverture du moule, avec le corps de moule fixe (1).

4. Moule selon l'une quelconque des revendications 1 à 3, dans lequel les deux arbres de support et d'entraînement (17, 20), associés respectivement aux deux parties tournantes (11, 12), sont des arbres cannelés qui traversent respectivement deux pignons de transmission (23, 25) cannelés intérieurement et montés tournants dans le corps de moule mobile (2), les deux pignons de transmission (23, 25) engrenant avec un même pignon central d'entraînement (27) monté tournant dans le corps de moule mobile (2) et lié en rotation avec un arbre cannelé central (29).

5. Moule selon la revendication 4, dans lequel l'arbre cannelé central (29) est prévu pour être accouplé à une base mécanique tournante, pour l'entraînement en rotation des deux parties tournantes (11, 12).

6. Moule selon l'une quelconque des revendications 1 à 5, dans lequel les moyens d'amenée de matière à injecter comprennent, du côté du corps de moule fixe (1), une arrivée de matière unique (4) alimentant simultanément une première buse d'injection (7) associée au noyau de moulage fixe (8) de ce corps de moule (1), une deuxième buse d'injection (9) située en regard du noyau de moulage (30) du corps de moule mobile (2), et une troisième buse d'injection (10) prévue dans la zone centrale du moule, pour la réalisation du joint (40) ou autre partie intermédiaire, qui est ainsi réalisé dans la même matière que les deux parties principales ou demi-coquilles (38,39) du corps moulé (41), dont il assure la liaison.

7. Moule selon l'une quelconque des revencations 1 à 5, dans lequel les moyens d'amenée de matière à injecter comportent une arrivée de matière distincte, pour réaliser le joint (40) ou autre partie intermédiaire dans une autre matière que celle constituant les deux parties principales ou demi-coquilles (38, 39).

8. Utilisation du moule selon l'une quelconque des revendications 1 à 7, pour la réalisation de corps creux (41) formés de deux demi-coquilles (38, 39) accolées, réunies par un joint (40) formé à la périphérie de ces demi-coquilles (38, 39), du côté extérieur du corps (41).

9. Utilisation du moule selon l'une quelconque des revendications 1 à 7, pour la réalisation de corps creux ou pleins (41, 44, 46, 51) avec pose d'un insert (42, 45, 49, 52) entre les deux demi-coquilles (38, 39) ou autres parties moulées (47,48 ; 53,54) assemblées par la matière de liaison injectée (40, 50, 55, 56).

## Claims

1. A mould for the injection of hollow bodies or other pieces, composed of two parts or half-shells joined by a joint or other intermediate part, said mould comprising:
- a fixed mould body (1), comprising a fixed mould core (8) which is eccentric with respect to the central axis (5) of the mould, and supply means (4, 6, 7, 9, 10) for material to be injected,
- a movable mould body (2) disposed opposite the fixed mould body (1) and comprising another eccentric mould core (30) which with respect to the central axis (5) of the mould is situated on the opposite side to the mould core (8) of the fixed mould body (1),
- a first turning part (11) which is situated between the fixed mould body (1) and the movable mould body (2), and which has an axis of rotation and of translation (13) parallel to the central axis (5) of the mould, the first turning part (11) comprising two diametrically opposed mould recesses (15, 16), the respective bases of which are oriented towards the fixed mould body (1), each recess (15, 16) being capable of coming into correspondence with the mould core (8) of the fixed mould body (1) or with the central axis (5) of the mould,
- a second turning part (12) which is situated between the fixed mould body (1) and the first turning part (11) and which has an axis of rotation and translation (14) which is parallel to the central axis (5) of the mould and which with respect to the central axis (5) of the mould is disposed symmetrically to the axis of rotation (13) of the first turning part (12), the second turning part (12) having two diametrically opposed mould recesses (18, 19), the respective bases of which are oriented towards the movable mould body (2), each recess (18, 19) being capable of coming into correspondence with the mould core (30) of the movable mould body (2) or with the central axis (5) of the mould,
- means of driving and rotating (17, 20, 23 to 29) the two turning parts (11, 12) by an angle of 180°, for exchanging the positions of the two recesses (15, 16; 18, 19) thereof,
said supply means (4, 6, 7, 9, 10) for material to be injected being provided for feeding a first mould cavity (35) situated at the level of the eccentric, fixed mould core (8) in order to mould a first part or half-shell (38) of the body (41) or of the piece to be produced, a second mould cavity (36) situated at the level of the other eccentric mould core (30) in order to mould a second part or half-shell (39) of the body (41) or of the piece to be produced, and a third cavity (37) situated in the central zone of the mould, for the production by injection of the joint (40) or other intermediate part which effects the assembly of the two moulded parts or half-shells (38, 39), **characterised in that** the first turning part (11) comprises a supporting and driving shaft (17) which is capable of sliding and rotating and which passes through the movable mould body (2), and that the second turning part (12) also comprises a supporting and driving shaft (20) which is capable of sliding and rotating and which passes through the movable mould body (2), and which is extended beyond said second turning part (12) by a holding shaft (21) which is mounted so that it can slide and rotate in the fixed mould body (1).

2. A mould according to claim 1, wherein the respective axes of rotation and translation (13, 14) of the two turning parts (11, 12) are placed horizontally above and below the horizontal central axis (5) of the mould, the three axes (5, 13, 14) thus being situated in the same vertical plane.

3. A mould according to claim 1 or 2, wherein the holding shaft (21) of the second turning part (12) is provided with a terminal head (22) forming a stop which in the opening position of the mould cooperates with the fixed mould body (1).

4. A mould according to any one of claims 1 to 3, wherein the two supporting and driving shafts (17, 20) which are associated with the two turning parts (11, 12), respectively, are splined shafts which pass through two internally splined transmission pinions (23, 25), respectively, which are rotatably mounted in the movable mould body (2), said two transmission pinions (23, 25) engaging with the same central driving pinion (27) which is rotatably mounted in the movable mould body (2) and which is attached in rotation to a central splined shaft (29).

5. A mould according to claim 4, wherein the central splined shaft (29) is designed to be coupled to a rotating mechanical base for driving the two turning parts (11, 12) in rotation.

6. A mould according to one any one of claims 1 to 5, wherein the supply means for material to be injected comprise, on the side of the fixed mould body (1), a single material inlet (4) which simultaneously feeds a first injection moulding nozzle (7) associated with the fixed mould core (8) of said mould body (1), a second injection moulding nozzle (9) situated opposite the mould core (30) of the movable mould body (2), and a third injection moulding nozzle (10) which is provided in the central zone of the mould, for the production of the joint (40) or other intermediate part which is thus produced in the same material as that of the two main parts or half-shells (38, 39) of the moulded body (41) for which it provides the connection.

7. A mould according to one any one of claims 1 to 5, wherein the supply means for material to be injected comprise an inlet for a different material in order to produce the joint (40) or other intermediate part in a different material to that from which the two main parts or half-shells (38, 39) are made.

8. Use of the mould according to any one of claims 1 to 7 for the production of hollow bodies (41) formed from two attached half-shells (38, 39) which are joined by a joint (40) formed at the periphery of said half-shells (38, 39) on the outside of the body (41).

9. Use of the mould according to any one of claims 1 to 7 for the production of hollow or solid bodies (41, 44, 46, 51) with the placement of an insert (42, 45, 49, 52) between the two half-shells (38, 39) or other moulded parts (47, 48; 53, 54) which are assembled by the injected joining material (40, 50, 55, 56).

## Patentansprüche

1. Spritzgußform für Hohlkörper oder andere Stücke, zusammengesetzt aus zwei Teilen oder Halb-Matrizen, die durch eine Verbindungsnaht oder ein anderes Zwischenstück verbunden sind, wobei die Gußform umfasst:
- einen feststehenden Formkörper (1), der einen festen Formkern (8) umfasst, der in bezug auf die zentrale Achse (5) der Form exzentrisch angeordnet ist, und Vorrichtungen (4, 6, 7, 9, 10) fiir die Zuleitung des einzuspritzenden Materials,
- einen beweglichen Formkörper (2), der dem feststehenden Formkörper (1) gegenüberliegend angeordnet ist und einen anderen exzentrischen Formkern (30) umfasst, der sich in bezug auf die zentrale Achse (5) der Form auf der gegenüberliegenden Seite des Formkerns (8) des feststehenden Formkörpers (1) befindet,
- ein erstes drehendes Teil (11), das sich zwischen dem feststehenden Formkörper (1) und dem beweglichen Formkörper (2) befindet und eine Dreh- und Parallelverschiebungs-Achse (13) besitzt, die parallel zur zentralen Achse (5) der Form verläuft, wobei das erste drehende Teil (11) zwei einander diametral entgegengesetzte Guß-Vertiefungen (15, 16) aufweist, deren Böden jeweils zum feststehenden Formkörper (1) hin gerichtet sind, wobei jede Vertiefung (15, 16) mit dem Formkern (8) des feststehenden Formkörpers (1) oder mit der zentralen Achse (5) der Form in Übereinstimmung kommen kann,
- ein zweites drehendes Teil (12), das sich zwischen dem feststehenden Formkörper (1) und dem ersten drehenden Teil (11) befindet, und eine Dreh- und Parallelverschiebungs-Achse (14) besitzt, die parallel zur zentralen Achse (5) der Form verläuft und in bezug auf die zentrale Achse (5) der Form symmetrisch zur Drehachse (13) des ersten drehenden Teils (12) angeordnet ist, wobei das zweite drehende Teil (12) zwei einander diametral entgegengesetzte Guß-Vertiefungen (18, 19) besitzt, deren Böden jeweils zum beweglichen Formkörper (2) hin gerichtet sind, wobei jede Vertiefung (18, 19) mit dem Formkern (30) des beweglichen Formkörpers (2) oder mit der zentralen Achse (5) der Form in Übereinstimmung kommen kann,
- Antriebsvorrichtungen (17, 20, 23 bis 29), um die zwei drehenden Teile (11, 12) um einen Winkel von 180° in eine Drehbewegung zu versetzen, damit deren zwei Vertiefungen (15, 16; 18, 19) ihre Positionen tauschen,
wobei die Vorrichtungen (4, 6, 7, 9, 10) für die Zuleitung des einzuspritzenden Materials vorgesehen sind zum Füllen eines ersten Guß-Hohlraums (35), der sich im Bereich des feststehenden exzentrischen Formkerns (8) befindet, um ein erstes Teil oder eine Halb-Matrize (38) des Körpers (41) oder des herzustellenden Stücks zu formen, und zum Füllen eines zweiten Guß-Hohlraums (36), der sich im Bereich des anderen exzentrischen Formkerns (30) befindet, um ein zweites Teil oder eine Halb-Matrize (39) des Körpers (41) oder des herzustellenden Stücks zu formen, und zum Füllen eines dritten Hohlraums (37), der im zentralen Bereich der Form liegt, um durch Spritzgiessen die Verbindungsnaht (40) oder ein anderes Zwischenstück herzustellen, wodurch das Zusammenfügen der zwei geformten Teile oder Halb-Matrizen (38, 39) realisiert wird, **dadurch gekennzeichnet, dass** das erste drehende Teil (11) eine Trag- und Antriebswelle (17) besitzt, die gleitend und drehend den beweglichen Formkörper (2) durchquert, und dadurch, dass das zweite drehende Teil (12) ebenfalls eine Trag- und Antriebswelle (20) besitzt, die gleitend und drehend den beweglichen Formkörper (2) durchquert, und jenseits dieses zweiten drehenden Teils (12) durch einen Tragarm (21) verlängert wird, der gleitend und drehend am feststehenden Formkörper (1) montiert ist.

2. Form nach Anspruch 1, bei der die jeweiligen Dreh- und Parallelverschiebungs-Achsen (13, 14) der zwei drehenden Teile (11, 12) horizontal oberhalb und unterhalb der zentralen horizontalen Achse (5) der Form angeordnet sind, wodurch die drei Achsen (5, 13, 14) auf einer gleichen vertikalen Ebene liegen.

3. Form nach Anspruch 1 oder 2, bei der der Tragarm (21) des zweiten drehenden Teils (12) mit einem Endkopf (22) versehen ist, der ein Gegenlager bildet, welches bei geöffneter Stellung der Form mit dem feststehenden Formkörper (1) zusammenarbeitet.

4. Form nach einem der Ansprüche 1 bis 3, bei der zwei Trag- und Antriebswellen (17, 20), die jeweils den zwei drehenden Teilen (11, 12) zugeordnet sind, Nutwellen sind, die jeweils zwei Übertragungsritzel (23, 25) durchqueren, die innen genutet sind und drehend im beweglichen Formkörper (2) montiert sind, wobei die zwei Übertragungsritzel (23, 25) in ein gleichartiges zentrales Antriebsritzel (27) eingreifen, das drehend in dem beweglichen Formkörper (2) montiert ist und bei Drehung mit einer zentralen Nutwelle (29) verbunden ist.

5. Form nach Anspruch 4, bei der die zentrale Nutwelle (29) vorgesehen ist, um an einen drehenden mechanischen Unterbau angekuppelt zu werden, um die zwei drehenden Teile (11, 12) in Drehbewegung zu versetzen.

6. Form nach einem der Ansprüche 1 bis 5, bei der die Zuleitungsvorrichtungen für das einzuspritzende Material auf der Seite des feststehenden Formkörpers (1) einen einzigen Materialzulauf (4) umfassen, der gleichzeitig eine erste Einspritzdüse (7) versorgt, die dem feststehenden Formkern (8) dieses Formkörpers zugeordnet ist, und eine zweite Einspritzdüse (9), die dem Formkern (30) des beweglichen Formkörpers (2) gegenüberliegt, und eine dritte Einspritzdüse (10), die im zentralen Bereich der Form vorgesehen ist, um die Verbindungsnaht (40) oder ein anderes Zwischenstück herzustellen, das folglich aus dem gleichen Material hergestellt wird wie die zwei Hauptteile oder Halb-Matrizen (38, 39) des spritzgegossenen Körpers (41), deren Verbindung sichergestellt wird.

7. Form nach einem der Ansprüche 1 bis 5, bei der die Zuleitungsvorrichtungen für das einzuspritzende Material einen getrennten Materialzulauf umfassen, um die Verbindungsnaht (49) oder ein anderes Zwischenstück aus einem anderen Material herzustellen als demjenigen, aus dem die zwei Hauptteile oder Halb-Matrizen (38, 39) bestehen.

8. Verwendung der Form nach einem der Ansprüche 1 bis 7 zur Herstellung von Hohlkörpern (41), die aus zwei aneinandergefügten Halb-Matrizen (38, 39) gebildet sind, die durch eine Verbindungsnaht (40) an der Peripherie dieser Halb-Matrizen (38, 39) auf der Außenseite des Körpers (41) vereinigt sind.

9. Verwendung der Form nach einem der Ansprüche 1 bis 7 zur Herstellung von hohlen oder vollen Körpern (41, 44, 46, 51) mit Einfügen eines Einsatzteils (42, 45, 49, 52) zwischen die zwei Halb-Matrizen (38, 39) oder zwischen andere spritzgegossene Teile (47, 48; 53, 54), die durch das eingespritzte Verbindungsmaterial (40, 50, 55, 56) zusammengefügt werden.
